# EUROPEAN PATENT APPLICATION

(11) **EP 3 185 557 A1**
(43) Date of publication of application: **28.06.2017**
(21) Application number: 15833754.3
(22) Date of filing: 21.08.2015
(51) Int. Cl.: H04N 19/176

(54) **PREDICTIVE CODING/DECODING METHOD, CORRESPONDING CODER/DECODER, AND ELECTRONIC DEVICE**

(30) Priority: 22.08.2014 CN 201410419875; 18.08.2015 CN 201510507084
(71) Applicant: ZTE Corporation, Shenzhen, Guangdong 518057 (CN)
(72) Inventor: LI, Ming, Shenzhen Guangdong 518057 (CN); WU, Ping, Shenzhen Guangdong 518057 (CN); SHANG, Guoqiang, Shenzhen Guangdong 518057 (CN); XIE, Yutang, Shenzhen Guangdong 518057 (CN)
(74) Representative: Awapatent AB
(86) International application number: PCT/CN2015/087736
(87) International publication number: WO 2016/026457

(57) **Abstract**

A predictive coding/decoding method, a corresponding coder/decoder, and an electronic device. The predictive coding method includes: configuring types of slices; when coding a slice of an inter prediction type, configuring a picture where the slice is located as a reference picture for the slice, using a first coding scheme to code coding blocks employing an intra block copying (IBC) mode in the slice, and, when coding a slice of an intra prediction type, using a second coding scheme that is different from the first coding scheme to code coding blocks employing the IBC mode in the slice. Also provided are the corresponding decoding method, the corresponding coder/decoder, and the electronic device. Different coding schemes are employed to code coding blocks employing the IBC mode in the slice of an inter prediction type and those in the slice of an intra prediction type, respective optimizations are allowed, thus increasing coding efficiency. Also provided are picture padding method and device, for use in padding non-coded/non-decoded units of a reference picture while coding/decoding.

## Description

### Technical Field

The present invention relates to the field of video coding/decoding, and in particular to a predictive coding/decoding method, a corresponding coder/decoder and an electronic device.

### Background

The Screen Content Coding (SCC) standard extended from H.265/High Efficiency Video Coding (HEVC) standard under development employs intra block copying (IBC) mode. Being different from the traditional method of predicting a pixel value within the current block using a reconstructed pixel of an adjacent block at the boundary of the current block within the current picture, IBC allows to use a reconstructed 2D pixel block within the current picture as a prediction block of the current block and at the same time IBC uses the relative offset between the prediction block and the current block to position a reference block, the offset being referred to as block copying vector (BV).

IBC is similar to the traditional inter prediction mode used in H.265/HEVC standard, and the difference lies in that IBC uses some decoded and reconstructed pixels in the current picture as reference and the traditional inter prediction mode uses the pixels in a picture decoded and reconstructed before the current picture according to the decoding order as reference. Comparing with the traditional inter prediction mode, IBC may use the same or similar block partitioning method, and the BV information of IBC may use the same or similar predictive coding method as or to the motion vector (MV) of the inter prediction mode.

In H.265/HEVC standard, the types of slices include inter prediction type and intra prediction type. In terms of basic concepts, a slice of an inter prediction type refers to that a coding block (or decoding block) in the slice may construct reference of the coding block (or decoding block) using sampling values of pixels in the picture where the slice is located or in other pictures except the picture where the slice is located; and a slice of an intra prediction type refers to that a coding block (or decoding block) in the slice constructs reference of the coding block (or decoding block) only using sampling values of pixels in the picture where the slice is located.

Considering the similarity between IBC and the existing inter prediction mode in H.265/HEVC, in order to avoid redundancy caused by defining a new coding/decoding method for coding blocks employing the IBC mode, JCTVC-R0100 and JCTVC-R0190 both propose to use IBC and inter prediction mode with a uniform structure in SCC standard expansion. JCTVC-R0100 proposes to add the current decoding picture into the last position of list 0 in a reference picture list and marks the current decoding picture as "long-term reference picture", so that the block partitioning and BV of the IBC can be coded using the existing block partitioning of the inter prediction mode and MV predictive coding method and at the same time the IBC relevant information is written into a bitstream using a syntax organization method of the inter prediction mode. JCTVC-R0190 proposes to process IBC as an inter prediction mode, an IBC block is represented with an "inter prediction block" in a slice the slice_type value of which equals to "2" (i.e., the value of pred_mode_flag equals to 0) and an IBC block is represented with an "inter prediction block with the list 0 reference picture index value of which equals to 1" in a slice the slice_type value of which equals to "0" or "1" (i.e., the value of pred_mode_flag equals to 0 and the value of ref_idx_10 equals to 1), so that the block partitioning and BV of the IBC can be coded using the existing block partitioning of the inter prediction mode and MV predictive coding method and at the same time the IBC relevant information is written into a bitstream using a syntax organization method of the inter prediction mode.

The above method can realize IBC and inter prediction mode with a uniform structure, which can directly apply efficient predictive coding methods such as prediction block partitioning, motion information coding and so on used for the inter prediction mode to IBC and obtain great coding efficiency improvement. Nevertheless, the inventor of the present invention has found that the above method has the following main defects in study:
first, all intra profile cannot be defined with the method for unifying IBC and inter prediction mode. For all intra coding with traditional intra slices, all pictures in a video sequence are coded with an intra predictive coding method. The method for unifying IBC and inter prediction mode needs to add a reference picture list to such all intra coding and add relevant description on the additional reference picture list in a plurality of methods such as profile definition, hypothetical reference decoder, conformance test, bitstream operation points and so on, which increases a complexity of all intra profile. In terms of coder design, the high level architecture of the existing H.265/HEVC all intra coder using traditional intra slices cannot be directly reused.

Second, even for a traditional intra coding picture, in the case where IBC is allowed, a reference picture list still needs to be constructed and used, and thus, in the case of using IBC, it requires to add additional operations for the reference picture list and the decoding picture buffer for a random access picture.

Third, on the basis of the method for unifying IBC and inter prediction mode, since the IBC mode is signalled completely using special inter prediction mode parameters (such as a specific reference picture), it is needed to modify the syntax organization structures and signalling methods of all inter prediction mode parameters for improving the IBC mode, which adds additional condition judgment to distinguishingly process IBC and inter prediction mode and thus also adds additional processing complexity. In particular, when improving the IBC mode of an intra coding picture, it requires to modifications on the inter prediction coding mode never used for the intra coding picture, which adds relevant condition judgment and corresponding processing procedures.

Fourth, the current method for unifying IBC and inter prediction mode is applied to intra predictive coding pictures and inter predictive coding pictures at the same time, which thus cannot improve and optimize the IBC mode with respect to the features of the intra predictive coding pictures and inter predictive coding pictures respectively.

In addition, in the current predictive coding and decoding process, the sampling values of non-coded and non-decoded pixels in a reference picture are all used to construct a reference block for IBC mode, and thus, the performance of constructing an IBC mode reference block still needs to be improved.

### Summary

The following is a summary of the subject matter described in detail herein. The summary is not intended to limit the protection scope of the claims.

In order to solve the above technical problem caused by unifying IBC and inter prediction mode, the technical solution provided according to the embodiments of the present invention is as follows.

A prediction coding method, applied to an encoder, including:
configuring types of slices;
when coding a slice of an inter prediction type, configuring a picture where the slice is located as a reference picture for the slice and using a first coding scheme to code coding blocks employing an intra block copying (IBC) mode in the slice; and
when coding a slice of an intra prediction type, using a second coding scheme that is different from the first coding scheme to code coding blocks employing the IBC mode in the slice.

Alternatively,
when coding a slice of an inter prediction type, configuring a picture where the slice is located as a reference picture for the slice includes: inserting the picture where the slice is located into a reference picture list as a reference picture for the slice.

Alternatively,
when coding a slice of an inter prediction type, configuring a picture where the slice is located as a reference picture for the slice further includes: adjusting the position of the picture where the slice is located in the reference picture list using a reference picture list modification operation and writing parameters relevant to the reference picture list modification operations into a bitstream.

Alternatively,
using a first coding scheme to code coding blocks employing an IBC mode in the slice of an inter prediction type includes: using a mode parameter coding scheme of an inter prediction mode to code IBC mode parameters.

Alternatively,
using a mode parameter coding scheme of an inter prediction mode to code IBC mode parameters includes: using a motion information coding method of a prediction unit (PU) to code IBC mode parameters, the coded IBC mode parameters including at least one of the following parameters: block partitioning, reference block indication vector and reference picture index.

Alternatively,
using a second coding scheme to code coding blocks employing the IBC mode in the slice of an intra prediction type includes:
coding IBC mode parameters in a coding block, the coded IBC mode parameters including at least one of the following parameters: block partitioning and reference block indication vector.

Alternatively,
using a second coding scheme to code coding blocks employing the IBC mode in the slice of an intra prediction type further includes:
during coding, using a reference picture list to place the picture where the slice is located at a fixed position in the reference picture list and not perform a reference picture list modification operation.

Alternatively,
coding IBC mode parameters in a coding block includes: coding IBC mode parameters in a coding unit (CU).

Alternatively,
before coding IBC mode parameters in a coding block, the method further includes: coding IBC mode identification information.

Alternatively,
configuring a picture where the slice is located as a reference picture for the slice includes: directly taking the picture where the slice is located as a reference picture for the slice; and
using a first coding scheme to code coding blocks employing the IBC mode in the slice of an inter prediction type includes:
using a coding unit (CU) to code IBC mode identification information and using a prediction unit (PU) to code IBC mode parameter information; or
using a prediction unit (PU) to code IBC mode identification information and IBC mode parameter information.

Alternatively,
using the first coding scheme and/or the second coding scheme to code coding blocks employing the IBC mode includes: during coding, padding sampling values of non-coded pixels in a reference block of the coding block.

A decoding method, applied to a decoder, including:
parsing a bitstream to obtain slice type information;
when decoding a slice of an inter prediction type, using a first decoding scheme to configure a picture where the slice is located as a reference picture for the slice and decode decoding blocks employing an intra block copying (IBC) mode in the slice; and
when decoding a slice of an intra prediction type, using a second decoding scheme that is different from the first decoding scheme to decode decoding blocks employing the IBC mode in the slice.

Alternatively,
using a first decoding scheme to configure a picture where the slice is located as a reference picture for the slice includes: inserting the picture where the slice is located into a reference picture list as a reference picture for the slice.

Alternatively,
using a first decoding scheme to configure a picture where the slice is located as a reference picture for the slice further includes:
parsing the bitstream to obtain the values of relevant parameters of a reference picture list modification operation; and
according to the values of the relevant parameters, performing a reference picture list modification operation to adjust the position of the picture where the slice is located in a reference picture list.

Alternatively,
using a first decoding scheme to decode decoding blocks employing an IBC mode in the slice includes: using a decoding scheme of an inter prediction mode to decode decoding blocks employing an IBC mode in the slice and obtaining IBC mode parameters by parsing bit fields corresponding to mode parameters of the inter prediction mode.

Alternatively,
obtaining IBC mode parameters by parsing bit fields corresponding to mode parameters of the inter prediction mode includes: obtaining at least one of the following IBC mode parameters by parsing a prediction unit (PU) and bit fields corresponding to motion information parameters therein: block partitioning, reference block indication vector and reference picture index.

Alternatively,
using a second decoding scheme that is different from the first decoding scheme to decode decoding blocks employing the IBC mode in the slice includes: obtaining at least one of the following IBC mode parameters by parsing bit fields corresponding to the IBC mode parameters in the decoding block: block partitioning and reference block indication vector.

Alternatively,
using a second decoding scheme to decode decoding blocks employing the IBC mode in the slice further includes:
during decoding, using a reference picture list to place the picture where the slice is located at a fixed position in the reference picture list and not perform a reference picture list modification operation.

Alternatively,
parsing bit fields corresponding to the IBC mode parameters in the decoding block includes: parsing bit fields corresponding to the IBC mode parameters in a coding unit (CU) to obtain the IBC mode parameters.

Alternatively,
before parsing bit fields corresponding to the IBC mode parameters in the decoding block, the method further includes: parsing bit fields corresponding to the IBC mode identification information in the decoding block to obtain the values of parameters corresponding to the IBC mode identification information.

Alternatively,
using a first decoding scheme to configure a picture where the slice is located as a reference picture for the slice includes: directly taking the picture where the slice is located as a reference picture for the slice; and
using a first decoding scheme to decode decoding blocks employing the IBC mode in the slice of an inter prediction type includes:
parsing bit fields corresponding to the IBC mode identification information in a CU to obtain IBC mode identification information; and parsing bit fields corresponding to the IBC mode parameters in a PU to obtain the values of the IBC mode parameters; or
parsing bit fields corresponding to the IBC mode identification information and the IBC mode parameters in a PU to obtain the IBC mode identification information and the values of the IBC mode parameters.

Alternatively,
using the first decoding scheme and/or the second decoding scheme to decode decoding blocks employing the IBC mode includes: during decoding, padding sampling values of non-decoded pixels in a reference block of the decoding block.

A coder, including:
a type configuration means arranged to be capable of configuring types of slices;
a first coding means arranged to code a slice of an inter prediction type, and during coding, configure a picture where the slice is located as a reference picture for the slice and use a first coding scheme to code coding blocks employing an intra block copying (IBC) mode in the slice; and
a second coding means arranged to code a slice of an intra prediction type, and during coding, use a second coding scheme that is different from the first coding scheme to code coding blocks employing the IBC mode in the slice.

Alternatively,
when the first coding means codes a slice of an inter prediction type, configuring a picture where the slice is located as a reference picture for the slice includes: inserting the picture where the slice is located into a reference picture list as a reference picture for the slice.

Alternatively,
when the first coding means codes a slice of an inter prediction type, configuring a picture where the slice is located as a reference picture for the slice further includes: adjusting the position of the picture where the slice is located in the reference picture list using a reference picture list modification operation and writing parameters relevant to the reference picture list modification operation into a bitstream.

Alternatively,
the first coding means using a first coding scheme to code coding blocks employing an IBC mode in the slice of an inter prediction type includes: using a mode parameter coding scheme of an inter prediction mode to code IBC mode parameters.

Alternatively,
the first coding means using a mode parameter coding scheme of an inter prediction mode to code IBC mode parameters includes: using a motion information coding method of a prediction unit (PU) to code IBC mode parameters, the coded IBC mode parameters including at least one of the following parameters: block partitioning, reference block indication vector and reference picture index.

Alternatively,
the second coding means using a second coding scheme to code coding blocks employing the IBC mode in the slice of an intra prediction type includes: directly coding IBC mode parameters in a coding block, the coded IBC mode parameters including at least one of the following parameters: block partitioning and reference block indication vector.

Alternatively,
the second coding means using a second coding scheme to code coding blocks employing the IBC mode in the slice of an intra prediction type further includes:
during coding, using a reference picture list to place the picture where the slice is located at a fixed position in the reference picture list and not perform a reference picture list modification operation.

Alternatively,
the second coding means directly coding IBC mode parameters in a coding block includes: coding IBC mode parameters in a coding unit (CU).

Alternatively,
before the second coding means codes the IBC mode parameters in a coding block, the method further includes: coding IBC mode identification information.

Alternatively,
the first coding means configuring a picture where the slice is located as a reference picture for the slice includes: directly taking the picture where the slice is located as a reference picture for the slice; and
the first coding means using a first coding scheme to code coding blocks employing the IBC mode in the slice of an inter prediction type includes:
using a coding unit (CU) to code IBC mode identification information and using a prediction unit (PU) to code IBC mode parameter information; or
using a prediction unit (PU) to code IBC mode identification information and IBC mode parameter information.

Alternatively,
the first coding means and/or the second coding means coding coding blocks employing the IBC mode includes: during coding, padding sampling values of non-coded pixels in a reference block of the coding block.

A decoder, including:
a type parsing means arranged to be capable of parsing a bitstream to obtain slice type information;
a first decoding means arranged to decode a slice of an inter prediction type, and during decoding, use a first decoding scheme to configure a picture where the slice is located as a reference picture for the slice and decode decoding blocks employing an intra block copying (IBC) mode in the slice; and
a second decoding means arranged to decode a slice of an intra prediction type, and during decoding, use a second decoding scheme that is different from the first decoding scheme to decode decoding blocks employing the IBC mode in the slice.

Alternatively,
when the first decoding means decodes a slice of an inter prediction type, configuring a picture where the slice is located as a reference picture for the slice includes: inserting the picture where the slice is located into a reference picture list as a reference picture for the slice.

Alternatively,
the first coding means using a first decoding scheme to configure a picture where the slice is located as a reference picture for the slice further includes:
parsing the bitstream to obtain the values of relevant parameters of a reference picture list modification operation; and
according to the values of the relevant parameters, performing a reference picture list modification operation to adjust the position of the picture where the slice is located in a reference picture list.

Alternatively,
the first coding means using a first decoding scheme to decode decoding blocks employing an IBC mode in the slice includes: using a decoding scheme of an inter prediction mode to decode decoding blocks employing an IBC mode in the slice and obtaining IBC mode parameters by parsing bit fields corresponding to mode parameters of the inter prediction mode.

Alternatively,
The first coding means obtaining IBC mode parameters by parsing bit fields corresponding to mode parameters of the inter prediction mode includes: obtaining at least one of the following IBC mode parameters by parsing a prediction unit (PU) and bit fields corresponding to motion information parameters therein: block partitioning, reference block indication vector and reference picture index.

Alternatively,
the second decoding means using a second decoding scheme that is different from the first decoding scheme to decode decoding blocks employing the IBC mode in the slice includes: obtaining at least one of the following IBC mode parameters by parsing bit fields corresponding to the IBC mode parameters in the decoding block: block partitioning and reference block indication vector.

Alternatively,
the second decoding means using a second decoding scheme to decode decoding blocks employing the IBC mode in the slice further includes:
during decoding, using a reference picture list to place the picture where the slice is located at a fixed position in the reference picture list and not perform a reference picture list modification operation.

Alternatively,
the second decoding means parsing bit fields corresponding to the IBC mode parameters in the decoding block includes: parsing bit fields corresponding to the IBC mode parameters in a coding unit (CU) to obtain the IBC mode parameters.

Alternatively,
before the second decoding means parses bit fields corresponding to the IBC mode parameters in the decoding block, the method further includes: parsing bit fields corresponding to the IBC mode identification information in the decoding block to obtain the values of parameters corresponding to the IBC mode identification information.

Alternatively,
the first decoding means using a first decoding scheme to configure a picture where the slice is located as a reference picture for the slice includes: directly taking the picture where the slice is located as a reference picture for the slice; and
the first decoding means using a first decoding scheme to decode decoding blocks employing the IBC mode in the slice of an inter prediction type includes:
parsing bit fields corresponding to the IBC mode identification information in a CU to obtain IBC mode identification information; and parsing bit fields corresponding to the IBC mode parameters in a PU to obtain the value of the IBC mode parameters; or
parsing bit fields corresponding to the IBC mode identification information and the IBC mode parameters in a PU to obtain the IBC mode identification information and the value of the IBC mode parameter.

Alternatively,
the first decoding means and/or the second decoding means decoding the decoding blocks employing the IBC mode includes: during decoding, padding sampling values of non-decoded pixels in a reference block of the decoding block.

An electronic device including a coder and/or decoder, herein
the coder employs any one of the above coders; and
the decoder employs any one of the above decoders.

By means of the above solution, employing different coding schemes to code coding blocks employing the IBC mode in a slice of an inter prediction type and a slice of an intra prediction type can improve coding efficiency and obtain the following one or more technical effects:
the IBC mode can be improved and optimized with respect to a slice of an inter prediction type and a slice of an intra prediction type respectively. To improve IBC mode, it is not needed to modify the syntax organization structure and declaration method of the inter prediction mode parameters and it is not needed to add additional condition judgment. When improving the IBC mode of an intra coding picture, there is no need to adjust the inter prediction coding mode never used for the intra coding picture.

For all intra coding using traditional intra slices, there is no need to add a reference picture list to all intra profile and add relevant description for the additional reference picture list in a plurality of methods such as profile definition, hypothetical reference decoder, conformance test, bitstream operation points and so on, simplifying the complexity of all intra profile.

For an traditional intra coding block, in the case where IBC is allowed, there is no need to construct and use a reference picture list, and there is no need to add additional operations for the reference picture list and the decoding picture buffer area for a random access picture.

For an inter predictive coding picture, the IBC mode can employ a structure uniform to the inter prediction mode, which has various advantages brought by the uniform structure.

In order to improve coding/decoding performance, the embodiments of the present invention also provide the following picture padding method and a corresponding electronic device.

A picture padding method, applied to a predictive coding and/or decoding process, including:
determining a picture for reference when performing predictive coding on a coding unit and/or decoding a decoding unit; and
padding sampling values of non-coded and/or non-decoded pixels in the picture.

Alternatively,
padding sampling values of non-coded pixels in the picture includes:
before coding the coding unit, padding the sampling values of all or parts of non-coded pixels in the picture, herein some non-coded pixels in the picture refer to non-coded pixels in the current coding unit and an adjacent coding unit thereof or refer to non-coded pixels within a prediction block range to which motion vectors or block copying vectors point; and
padding sampling values of non-decoded pixels in the picture includes:
   padding the sampling values of all or parts of non-decoded pixels in the picture, herein some non-decoded pixels in the picture refer to non-decoded pixels in the current decoding unit and an adjacent decoding unit thereof or refer to non-decoded pixels within a prediction block range to which motion vectors or block copying vectors point.

Alternatively,
padding sampling values of non-coded pixels in the picture includes:
configuring sampling values of non-coded pixels in the picture as default values; or
configuring sampling values of non-coded pixels in the picture as sampling values of specified pixels; or
configuring sampling values of non-coded pixels in the picture as output values of sampling values of coded pixels after filtering processing; and
padding sampling values of non-decoded pixels in the picture includes:
   configuring sampling values of non-decoded pixels in the picture as default values; or
   configuring sampling values of non-decoded pixels in the picture as sampling values of specified pixels; or
   configuring sampling values of non-decoded pixel in the picture as output values of sampling values of decoded pixels after filtering processing.

Alternatively,
in the process of predictive coding, after padding sampling values of non-coded pixels in the picture, the method further includes: writing corresponding padding scheme information into a bitstream, the padding scheme information including at least one of the following information:
indication information about whether adaptive padding is used;
when adaptive padding is used, indication information about the used padding scheme and a relevant parameter;
when adaptive padding is not used, padding values of sampling values of used non-coded pixels; and
in the process of decoding, padding sampling values of non-decoded pixels in the picture according to the padding scheme information parsed from the bitstream.

Alternatively,
after padding sampling values of non-coded pixels in the picture, the method further includes: after the coding unit completes coding, updating sampling values of corresponding pixels in the picture with local decoded and reconstructed sampling values of coded pixels in the current coding picture, and padding the sampling values of the non-coded pixels in the picture using the reconstructed sampling values.

Alternatively,
after padding sampling values of non-decoded pixels in the picture, the method further includes: after the decoding unit completes decoding, updating sampling values of corresponding pixels in the picture with reconstructed sampling values of decoded pixels in the current decoded picture, and padding the sampling values of the non-decoded pixels in the picture using the reconstructed sampling values.

An electronic device including a coder and/or decoder, herein
the coder includes:
a determination means arranged to be capable of determining a picture for reference when performing predictive coding on a coding unit;
padding sampling values of non-coded and/or non-decoded pixels in the picture.
a coding padding means arranged to be capable of padding sampling values of non-coded pixels in the picture; and
the decoder includes:
   a determination means arranged to be capable of determining a picture for reference when performing decoding on a decoding unit; and
   a decoding padding means arranged to be capable of padding sampling values of non-decoded pixels in the picture.

Alternatively,
the coding padding means padding sampling values of non-coded pixels in the picture includes:
padding the sampling values of all or parts of non-coded pixels in the picture, herein some non-coded pixels in the picture refer to non-coded pixels in the current coding unit and an adjacent coding unit thereof or refer to non-coded pixels within a prediction block range to which motion vectors or block copying vectors point; and
the decoding padding means padding sampling values of non-decoded pixels in the picture includes:
   before decoding the decoding unit, padding the sampling values of all or parts of non-decoded pixels in the picture, herein some non-decoded pixels in the picture refer to non-decoded pixels in the current decoding unit and an adjacent decoding unit thereof or refer to non-decoded pixels within a prediction block range to which motion vectors or block copying vectors point; and

Alternatively,
the coding padding means padding a sampling value of non-coded pixels in the picture includes:
configuring sampling values of non-coded pixels in the picture as default values; or
configuring sampling values of non-coded pixels in the picture as sampling values of specified pixels; or
configuring sampling values of non-coded pixels in the picture as output values of sampling values of coded pixels after filtering processing; and
the decoding padding means padding sampling values of non-decoded pixels in the picture includes:
   configuring sampling values of non-decoded pixels in the picture as default values; or
   configuring sampling values of non-decoded pixels in the picture as sampling values of specified pixels; or
   configuring sampling values of non-decoded pixels in the picture as output values of sampling values of decoded pixels after filtering processing.

Alternatively,
after the coding padding means pads sampling values of non-coded pixels in the picture, the method further includes: writing corresponding padding scheme information into a bitstream, the padding scheme information including at least one of the following information:
indication information about whether adaptive padding is used;
when adaptive padding is used, indication information about the used padding scheme and relevant parameters;
when adaptive padding is not used, padding values of sampling values of used non-coded pixels; and
in the process of the decoding padding means performing decoding, padding sampling values of non-decoded pixels in the picture according to the padding scheme information parsed from the bitstream.

Alternatively,
after the coding padding means pads sampling values of non-coded pixels in the picture, the method further includes:
after the coding unit completes coding, updating sampling values of corresponding pixels in the picture with local decoded and reconstructed sampling values of coded pixels in the current coding picture, and padding the sampling values of the non-coded pixels in the picture using the reconstructed sampling values.

Alternatively,
after the decoding padding means pads sampling values of non-decoded pixels in the picture, the method further includes:
after the decoding unit completes decoding, updating sampling values of corresponding pixels in the picture with reconstructed sampling values of decoded pixels in the current decoding picture, and padding the sampling values of the non-decoded pixels in the picture using the reconstructed sampling values.

Prediction accuracy can be improved by padding sampling values of non-coded and/or non-decoded pixels in a reference picture, thus improving coding/decoding performance.

Other aspects can be understood upon reading and understanding the accompanying drawings and detailed description.

### Brief Description of Drawings

Fig. 1 is a general flowchart of a coding method according to embodiment 1 of the present invention;
Figs. 2 and 3 are sub-flowcharts of a coding method according to embodiment 1 of the present invention;
Fig. 4 is a modular view of a coder according to embodiment 1 of the present invention;
Fig. 5 is a general flowchart of a decoding method according to embodiment 2 of the present invention;
Figs. 6 and 7 are sub-flowcharts of a decoding method according to embodiment 2 of the present invention;
Fig. 8 is a modular view of a decoder according to embodiment 2 of the present invention;
Fig. 9 is a flowchart of a padding method according to embodiment 4 of the present invention; and
Figs. 10 and 11 are modular views of a coder and a decoder in an electronic device according to embodiment 4 of the present invention.

### Specific Embodiments of the Invention

In order to make the technical problem to be solved by the present invention, the technical solution and advantages more clear, the present invention will be described in detail in conjunction with the accompanying drawings and specific embodiments hereinafter.

In SCC standard extended from H.265/HEVC standard, a slice is an independent decoding unit in a picture, one picture including one or more slices and one slice including one or more coding blocks. Herein, the coding block is at least of the following block units: coding tree unit (CTU), coding unit, prediction unit (PU) and transform unit (TU). During decoding, the above block units are referred to as decoding blocks.

In H.265/HEVC standard, on a slice layer, slice types include intra prediction type and inter prediction type. In terms of basic concept, a slice of an inter prediction type refers to that a coding block (or decoding block) in the slice may construct a reference of the coding block (or decoding block) using sampling values of pixels in the picture where the slice is located or in other pictures except the picture where the slice is located; and a slice of an intra prediction type refers to that a coding block (or decoding block) in the slice constructs a reference of the coding block (or decoding block) only using sampling values of pixels in the picture where the slice is located. In SCC standard extended from H.265/HEVC standard, a slice of an inter prediction type may be a slice the slice_type value of which equals to "0" or "1", and the coding block/decoding block in such a slice may use IBC mode, inter prediction mode and traditional intra prediction mode. A slice of an intra prediction type may be a slice the slice_type value of which equals to "0" or "1" and the coding block/decoding block of which uses IBC mode and traditional intra prediction mode or the slice_type value of which equals to "2" and the coding block/decoding block of which uses traditional intra prediction mode.

The present invention mainly focuses on how to code/decode a coding block/decoding block employing the IBC mode, and a coding block/decoding block employing the IBC mode in a slice of an inter prediction type and a slice of an intra prediction type is coded/decoded according to different coding schemes.

### Embodiment 1

This embodiment provides a predictive coding method and a corresponding coder.

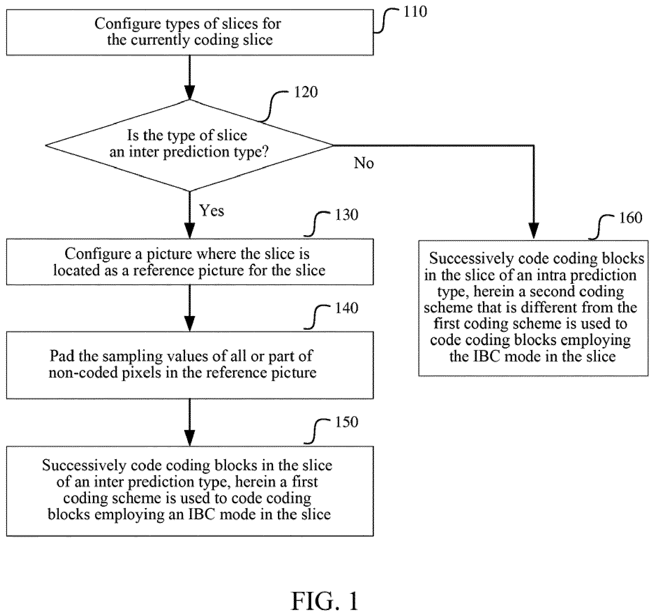

The process of coding a slice using the predictive coding method in this embodiment is as shown in Fig. 1 and includes the following steps.

In step 110, types of slices are configured for the currently coding slice.

A coder may configure the slice type of a slice in a picture according to preset prediction structure information and write the configured slice type information into a bitstream. The slice type information may be indicated by the slice_type field in the slice segment header information.

In step 120, if the configured slice type is inter prediction type, then step 130 will be performed, otherwise, step 160 will be performed.

If the configured slice type is inter prediction type, then coding of an inter prediction type will be used for the current coding slice.

In step 130, a picture where the slice is located is configured as a reference picture for the slice.

In this embodiment, the picture where the slice is located is inserted into a reference picture list as a reference picture for the slice itself.

The coder may place the current coding picture at a fixed position in the reference picture list and may also adaptively adjust the position of the current coding picture in the reference picture list. The coder may adjust the position of the current coding picture in the reference picture list by configuring and using modification information of the reference picture list (i.e., parameters relevant to the reference picture list modification operation) and write the information of the reference picture list modification into a bitstream. The insertion process may be divided into two steps to be completed, the first step is to place the current coding picture into a fixed position of a temporary list and the second step is to place the content of the temporary list into the reference picture list and adjust the position of the current coding picture. However, the present invention may also directly insert the current coding picture into the reference picture list and adjust the position of the current coding picture without placing at a default fixed position.

In step 140, sampling values of all or parts of non-coded pixels in the reference picture are padded.

This step is optional. In order to improve prediction accuracy and improve coding performance, this embodiment pads the reference picture.

The coder may configure sampling values of all non-coded pixels in the reference picture and may also pad sampling values of some non-coded pixels. Herein, the sampling values of some non-coded pixels may refer to non-coded pixels in the current coding block and an adjacent coding block thereof or refer to non-coded pixels within a prediction block range to which motion vectors or block copying vetcors point.

In terms of the particular padding scheme, there may be two classes, i.e., not to use adaptive padding and use adaptive padding. With regard to not using adaptive padding, for example, the sampling values of non-decoded pixels in the reference picture may be configured as default preset values (i.e., default values), for example, 1/2 of the maximum allowable sampling value, 0 and maximum and so on. With regard to using adaptive padding, for example, the sampling values of non-coded pixels in the reference picture list may be configured as the mean value of the sampling values of the pixels of recently coded coding blocks or the sampling values of designated sampling points, or configured as the sampling value of the last coded pixel in each column direction. The sampling values of non-coded pixels in the reference picture are configured as output values of an interpolation filter. The input of the interpolation filter is sampling values of coded pixels. The filter may be a 1D filter along a certain designated direction (such as column direction) and may also be a 2D filter. The filter may be an interpolation filter using fixed coefficients and may also be an adaptive filter. The coder writes parameter information such as filter shape, coefficients and so on into a bitstream. The coder may determine the particular parameters used in the coding process with a coder optimization module (such as commonly used coder control module designed based on rate distortion criterion).

The coder and the decoder may agree on a used padding scheme and the used padding scheme information may also be written into a bitstream. The padding scheme information may include at least one of the following information:
indication information about whether adaptive padding is used;
when adaptive padding is used, indication information about the used padding scheme and relevant parameters;
when adaptive padding is not used, padding values of sampling values of used non-coded pixels; and
the coder may write the above padding scheme information into the following one or more information units of the bitstream: parameter set, slice segment header information, coding tree unit (CTU) and CU. In the decoding process, sampling values of non-decoded pixels in the reference picture may be padded according to the padding scheme information parsed from the bitstream.

In step 150, coding blocks in a slice of an inter prediction type are coded successively, herein a first coding scheme is used to code coding blocks employing an IBC mode in the slice and then the step is ended.

In step 160, coding blocks in a slice of an intra prediction type are coded successively, herein a second coding scheme that is different from the first coding scheme is used to code coding blocks employing the IBC mode in the slice.

Before step 160 or during performing process of this step, the coder may also pad the picture where the slice of an intra prediction type is located (cached picture), and the padding scheme may employ the schemes described in step 140.

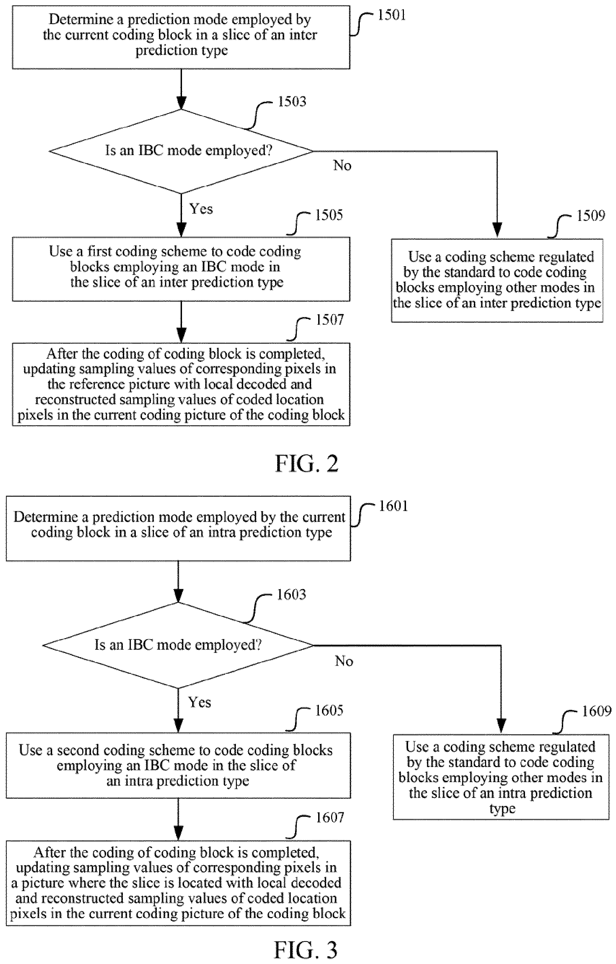

In the above step 150, the coder will successively code the bitstream of each CTU in the slice and successively code the bitstream of each block (including at least one of CU, PU and TU) in the CTU for each CTU. Coding the current coding block in the slice of an inter prediction type may be divided into the following steps, as shown in Fig. 3.

In step 1501, a prediction mode used in the current coding block in the slice of an inter prediction type is determined.

The coder may use a coder optimization module to determine to use an ordinary intra prediction mode, IBC mode or inter prediction mode for the current coding block.

In step 1503, if the IBC mode is employed, then step 1505 will be performed, otherwise, step 1509 will be performed.

In step 1505, a first coding scheme is used to code coding blocks employing an IBC mode in the slice of an inter prediction type.

Using a first coding scheme to code may include: using a mode parameter coding scheme of an inter prediction mode to code IBC mode parameters. For example, a motion information coding method of a prediction unit (PU) may be used to code the IBC mode parameters, the coded IBC mode parameters including at least one of the following parameters: block partitioning, reference block indication vector and reference picture index. In this embodiment, the coding block employing the IBC mode may be identified with an inter prediction mode without coding dedicated IBC mode identification information. The decoder may determine that it is a decoding block employing the IBC mode according to the inter prediction mode identification and the reference picture index pointing to the picture where it is located.

This embodiment does not limit the prediction block partitioning method of IBC, which may be traditional rectangle and square block partitioning method and may also be Nx1 or 1xN string partitioning. The string matching method is a special example of IBC using Nx1 or 1xN string partitioning method. The reference block indication vector represents the relative position offset between the reference block and the current coding block, i.e., BV. The reference block indication vector may be coded directly and the reference block indicator vector may also be represented with reference block indication vector parameters and the reference block indication vector parameter is coded. The reference block indication vector parameter may include at least one of the following parameters: BV prediction value index serial number and BV prediction difference. Alternatively, the coder may limit the dynamic range of BV within the range of the slice where the current coding block is located.

The coder constructs prediction values of sampling values of pixels in the current coding block according to the IBC mode parameter. The coder may use one or more reference blocks to which the BVs point, combine the one or more reference blocks into a prediction block with the same shape as the current coding block according to the IBC mode block partitioning method, take the sampling values of the pixels contained in the prediction block as the prediction value of the current block or weight the sampling values of the pixels in the prediction block as the IBC mode reference block.

In step 1507, after the coding block completes coding, sampling values of corresponding pixels in the reference picture are updated with local decoded and reconstructed sampling values of coded pixels in the current coding picture of the coding block.

In this step, after sampling values of corresponding pixels in the reference picture are updated, the sampling values of the non-coded pixels in the reference picture may be padded with the same padding scheme using the reconstructed sampling values.

In step 1509, coding blocks employing other modes in the slice of an inter prediction type are coded according to a standard coding scheme.

There may be coding blocks employing an inter prediction mode and coding blocks employing an ordinary intra prediction mode in the slice of an inter prediction type as long as the coding methods of these coding blocks follow the regulations of the standard.

In a variant of this embodiment, for a slice of an inter prediction type, the picture where the slice is located is directly used as a reference picture for the slice without inserting the picture into a reference picture list. Using a first coding scheme to code coding blocks employing the IBC mode in the slice may include: using a coding unit (CU) to code IBC mode identification information, using a prediction unit (PU) to code IBC mode parameter information, or using a prediction unit (PU) to code IBC mode identification information and IBC mode parameter information.

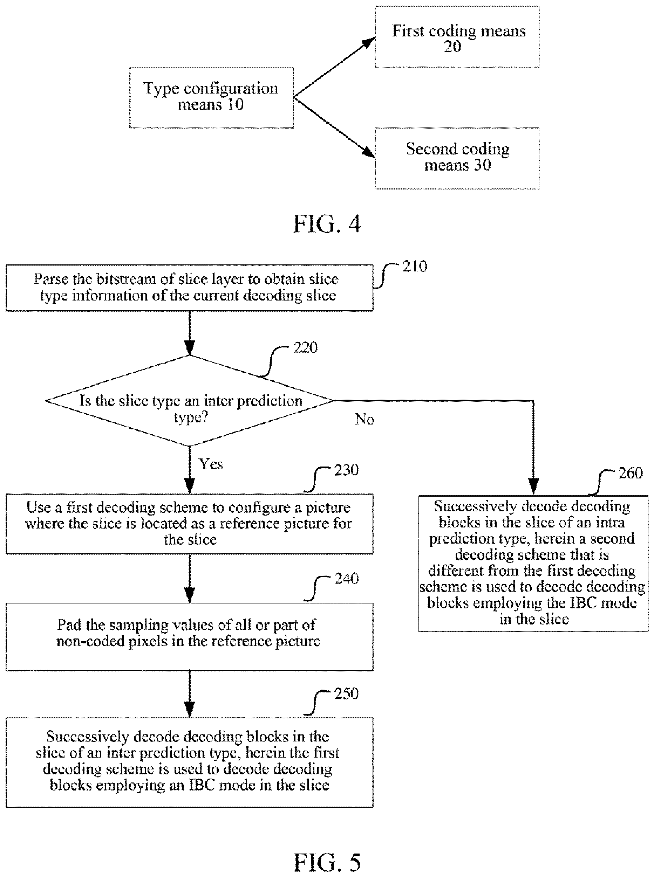

In step 160, the coder will successively code the bitstream of each CTU in the slice and successively code the bitstream of each block in the CTU for each CTU. Coding the current coding block in the slice of an intra prediction type may be divided into the following steps, as shown in Fig. 4.

In step 1601, a prediction mode used in the current coding block in the slice of an intra prediction type is determined.

The coder may use a coder optimization module to determine to use an ordinary intra prediction mode or IBC mode for the current coding block.

In step 1603, if it is determined to employ the IBC mode, then step 1605 will be performed, otherwise, step 1609 will be performed.

In step 1605, a second coding scheme is used to code coding blocks employing the IBC mode in the slice of an intra prediction type.

Using a second coding scheme to code may include: coding IBC mode parameters in a coding block, the coded IBC mode parameters including at least one of the following parameters: block partitioning and reference block indication vector. For example, the IBC mode parameters may be coded directly in a coding unit (CU). Before coding the IBC mode parameters of the coding block, the coding scheme may code IBC mode identification information. The IBC mode identification information may be coded in a CU and/or may also be coded with a PU. The IBC mode identification information may directly identify that "the current coding block employs the IBC mode", such as using one flag; and may also implicitly identify the IBC mode, for example, the IBC mode is implicitly identified with a combination of relevant information which indicates "sampling values of pixels contained in an area with the same shape and size as the current coding block in the picture where the current slice is located are used as prediction values of sampling values of pixels to be coded in the current coding block". When using the second coding scheme to perform coding, a reference picture list may be used and the coder places the picture where the slice is located at a fixed position in the reference picture list without performing a reference picture list modification operation, that is, not adaptively adjusting the position of the picture where the slice is located in the reference picture list, and not writing parameter information relevant to the reference picture list modification operation for the reference picture list into a bitstream corresponding to a slice containing a coding block coded using the second coding scheme.

In step 1607, after the coding block completes coding, sampling values of corresponding pixels in the picture where the slice is located are updated with local decoded and reconstructed sampling values of coded pixels in the current coding picture of the coding block and this step is ended.

After sampling values of corresponding pixels in the picture where the slice is located are updated, the sampling values of the non-coded pixels in the picture where the slice is located may be padded with the same padding scheme using the reconstructed sampling values.

In step 1609, coding blocks employing other modes in the slice of an intra prediction type are coded according to a standard coding scheme.

There may be coding blocks employing an ordinary intra prediction mode in the slice of an inter prediction type as long as the coding methods of these coding blocks follow the regulations of the standard.

In the above method, using the first coding scheme and/or the second coding scheme to code coding blocks employing the IBC mode may include: during coding, padding sampling values of non-coded pixels in a reference block of the coding block.

Accordingly, as shown in Fig. 4, the coder provided according to this embodiment includes:
a type configuration means 10 arranged to be capable of configuring types of slices;
a first coding means 20 arranged to code a slice of an inter prediction type, and during coding, configure a picture where the slice is located as a reference picture for the slice and use a first coding scheme to code coding blocks employing an intra block copying (IBC) mode in the slice; and
a second coding means 30 arranged to code a slice of an intra prediction type, and during coding, use a second coding scheme that is different from the first coding scheme to code coding blocks employing the IBC mode in the slice.

When the above first coding means 20 codes a slice of an inter prediction type, configuring a picture where the slice is located as a reference picture for the slice may include: inserting the picture where the slice is located into a reference picture list as a reference picture for the slice. Alternatively, the coder may perform a reference picture list modification operation to adjust the position of the picture where the slice is located in the reference picture list and write parameters relevant to the reference picture list modification operation into a bitstream.

The above first coding means 20 using a first coding scheme to code coding blocks employing an IBC mode in the slice of an inter prediction type may include: using a mode parameter coding scheme of an inter prediction mode to code IBC mode parameters.

The above first coding means 20 using a mode parameter coding scheme of an inter prediction mode to code IBC mode parameters may include: using a motion information coding method of a prediction unit (PU) to code IBC mode parameters, the coded IBC mode parameters including at least one of the following parameters: block partitioning, reference block indication vector and reference picture index.

The above second coding means 30 using a second coding scheme to code coding blocks employing the IBC mode in the slice of an intra prediction type may include: coding IBC mode parameters in a coding block, the coded IBC mode parameters including at least one of the following parameters: block partitioning and reference block indication vector. Using the second coding scheme to perform coding further includes: during coding, using a reference picture list to place the picture where the slice is located at a fixed position in the reference picture list and not perform a reference picture list modification operation.

The above second coding means 30 directly coding IBC mode parameters in a coding block may include: directly coding IBC mode parameters in a coding unit (CU).

The above second coding means may further include: coding IBC mode identification information. The IBC mode identification information may directly identify that "the current coding block employs the IBC mode"; and may also implicitly identify the IBC mode, for example, the IBC mode is implicitly identified with a combination of relevant information which indicates "sampling values of pixels contained in an area with the same shape and size as the current coding block in the picture where the current slice is located are used as prediction values of sampling values of pixels to be coded in the current coding block".

The above first coding means and/or the second coding means coding coding blocks employing the IBC mode may include: during coding, padding sampling values of non-coded pixels in a reference block of the coding block.

As a variant of this embodiment, for a slice of an inter prediction type, the first coding means 20 may directly take a picture where the slice is located as a reference picture for the slice when configuring the picture where the slice is located as a reference picture for the slice. The first coding means 20 using a first coding scheme to code coding blocks employing an IBC mode in the slice of an inter prediction type may include: using a coding unit (CU) to code IBC mode identification information, using a prediction unit (PU) to code IBC mode parameter information, or using a prediction unit (PU) to code IBC mode identification information and IBC mode parameter information.

### Embodiment 2

This embodiment provides a decoding method and a corresponding decoder corresponding to the coding method and coder in embodiment 1.

The decoding method in this embodiment is applied to a decoder. The decoding process of a slice is as shown in Fig. 5 and includes the following steps.

In step 210, a slice bitstream is parsed to obtain slice type information about the current decoding slice.

The slice type information refers to slice type information indicated by a slice_type field in slice segment header information.

In step 220, if the slice type is a slice of an inter prediction type, then step 230 will be performed, otherwise, step 260 will be performed.

If the slice type is a slice of an inter prediction type, it means that decoding of an inter prediction type will be used for the current coding slice.

In step 230, a picture where the slice is located is configured as a reference picture for the slice using a first decoding scheme.

In this embodiment, the decoder constructs a reference picture list and inserts the picture where the slice is located into the reference picture list as a reference picture for the slice. The decoder may place the picture where the slice is located at a fixed position in the reference picture list and may also adaptively adjust the position of the current decoding picture in the reference list. The decoder parses the bitstream to obtain reference picture list modification information (i.e., reference picture list modification operation relevant parameters) and performs a reference picture list modification operation according to the relevant parameters to adjust the position of the current decoding picture in the reference picture list.

In step 240, sampling values of all or parts of non-coded pixels in the reference picture are padded.

This step is optional. In order to improve prediction accuracy and improve coding performance, this embodiment further pads the reference picture.

The decoder may configure sampling values of all non-decoded pixels in the reference picture and may also pad sampling values of some non-decoded pixels. Herein, the sampling values of some non-decoded pixels may refer to non-decoded pixels in the current decoding block and an adjacent decoding block thereof or refer to non-decoded pixels within a prediction block range to which motion vectors or block copying vectors point.

In terms of the particular padding scheme, the padding schemes described in step 140 may be applied, which will not be described here. If the coder writes the used padding scheme information into a bitstream, then the decoder may pad sampling values of non-decoded pixels in the reference picture according to the padding scheme information parsed from the bitstream.

In step 250, decoding blocks in a slice of an inter prediction type are decoded successively, herein a first decoding scheme is used to decode decoding blocks employing an IBC mode in the slice and then the step is ended.

In step 260, decoding blocks in a slice of an intra prediction type are decoded successively, herein a second decoding scheme that is different from the first decoding scheme is used to decode decoding blocks employing the IBC mode in the slice.

In addition, before step 260, the decoder may pad the picture where the slice of an intra prediction type is located (cached picture), and the padding scheme may employ the schemes described in step 240.

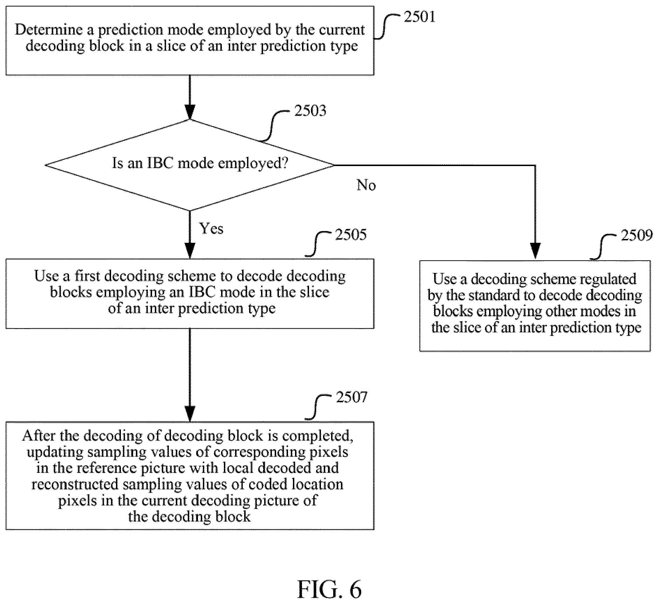

In above step 250, the decoder will successively parse the bitstream of each CTU in the slice and successively parse the bitstream of each block (including at least one of CU, PU and TU) in the CTU for each CTU. Decoding the current decoding block in the slice of an inter prediction type includes the following steps, as shown in Fig. 6.

In step 2501, a prediction mode used in the current decoding block in the slice of an inter prediction type is determined.

The "decoding method" includes the representation method and coding location of a mode relevant parameter in the bitstream. In a slice of an inter prediction type, in the case of implicitly identifying the IBC mode with a reference picture index, whether it is a decoding block of the IBC mode can only be determined when the reference picture index is parsed, and at this moment, the block partitioning method and reference picture index in the IBC mode parameters have been obtained. If the IBC mode uses an "explicit" bitstream organization method of "first flag and then parameters" in a slice of an inter prediction type, the decoder may first determine that it is a decoding block employing the IBC mode and then decode the relevant mode parameters. Flag therein may be IBC mode identification.

In step 2503, if the IBC mode is employed, then step 2505 will be performed, otherwise, step 2509 will be performed.

In step 2505, a first decoding scheme is used to decode decoding blocks employing the IBC mode in the slice of an inter prediction type.

In this embodiment, a decoding scheme of an inter prediction mode is used to decode decoding blocks employing an IBC mode in the slice and IBC mode parameters are obtained by parsing bit fields corresponding to mode parameters of the inter prediction mode. For example, at least one of the following IBC mode parameters may be obtained by parsing a prediction unit (PU) and bit fields corresponding to motion information parameters therein: block partitioning, reference block indication vector and reference picture index.

The decoder constructs prediction values of sample values in the current decoding block according to the IBC mode parameter.

In step 2507, after the decoding block completes decoding, sampling values of corresponding pixels in the reference picture are updated with reconstructed sample values of decoded pixels in the current decoding picture and this step is ended.

In this step, after sampling values of corresponding pixels in the reference picture are updated, the sampling values of the non-decoded pixels in the reference picture may be padded with the same padding scheme using the reconstructed sampling values.

In step 2509, decoding blocks employing other modes in the slice of an inter prediction type are decoded according to a standard decoding scheme.

There may be decoding blocks employing an inter prediction mode and decoding blocks employing an ordinary intra prediction mode in the slice of an inter prediction type as long as the decoding methods of these decoding blocks follow the regulations of the standard.

In a variant of this embodiment, for a slice of an inter prediction type, a first decoding scheme may be used to directly take a picture where the slice is located as a reference picture for the slice when configuring the picture where the slice is located as a reference picture for the slice. Using a first decoding scheme to decode decoding blocks employing the IBC mode in the slice of an inter prediction type includes:
parsing bit fields corresponding to IBC mode identification information in a CU to obtain IBC mode identification information; and parsing bit fields corresponding to IBC mode parameters in a PU to obtain the values of the IBC mode parameters; or
parsing bit fields corresponding to IBC mode identification information and IBC mode parameters in a PU to obtain the IBC mode identification information and the values of the IBC mode parameters.

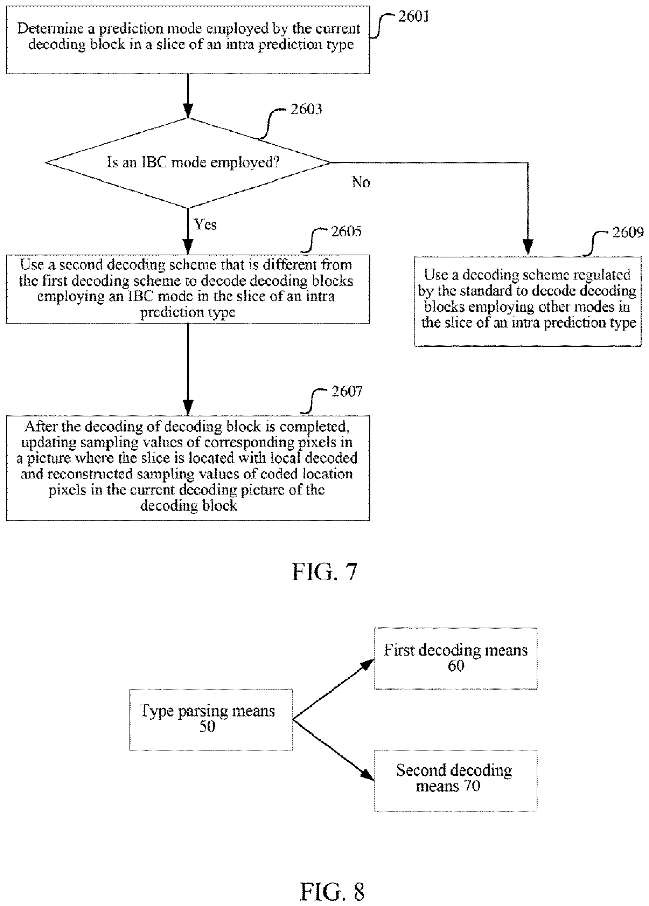

In step 260, the decoder will successively decode the bitstream of each CTU in the slice and successively decode the bitstream of each block in the CTU for each CTU. Decoding the current decoding block in the slice of an intra prediction type includes the following steps, as shown in Fig. 7.

In step 2601, a prediction mode used in the current decoding block in the slice of an intra prediction type is determined.

In this step, bit fields corresponding to IBC mode identification information in a decoding block may be parsed to obtain the values of the parameters corresponding to the IBC mode identification information.

For example, corresponding to the methods in embodiment 1 that the coder identifies the IBC mode in a bitstream, and the decoder obtains the IBC mode identification information by directly parsing the bitstream, that is, parsing a field corresponding to the identification information directly identifying that "the current decoding block employs the IBC mode" in the bitstream; or the decoder uses a combination of other parsed relevant information which implicitly identifies that "the current decoding block employs the IBC mode", for example, a combination of information which implicitly identifies the IBC mode indicates "sampling values of pixels contained in an area with the same shape and size as the current coding block in the picture where the current slice is located are used as prediction values of sampling values of pixels to be coded in the current coding block".

In step 2603, if it is determined that the IBC mode is employed, then step 2605 will be performed, otherwise, step 2609 will be performed.

In step 2605, a second decoding scheme that is different from the first decoding scheme is used to decode decoding blocks employing the IBC mode in the slice of an intra prediction type.

In this embodiment, using a second decoding scheme to decode decoding blocks employing the IBC mode in the slice includes: obtaining at least one of the following IBC mode parameters by parsing bit fields corresponding to the IBC mode parameters in the decoding block: block partitioning and reference block indication vector. For example, bit fields corresponding to the IBC mode parameters in a coding unit (CU) are parsed to obtain the IBC mode parameters. When using the second coding scheme to perform coding, the decoder may use a reference picture list to place the picture where the slice is located at a fixed position in the reference picture list without performing a reference picture list modification operation, that is, not performing adaptive adjustment on the picture position in the reference picture list. At the same time, there is no indication information of performing adaptive position adjustment on a picture in the reference picture list in the received bitstream corresponding to the slice containing the current decoding block which is decoded using the second decoding scheme.

In step 2607, after the decoding block completes decoding, sampling values of corresponding pixels in the picture where the slice is located are updated with reconstructed sampling values of decoded pixels in the current decoding picture of the decoding block and this step is ended.

After sampling values of corresponding pixels in the picture where the slice is located are updated, the sampling values of the non-coded pixels in the picture where the slice is located may be padded with the same padding scheme using the reconstructed sampling values.

In step 2609, decoding blocks employing other modes in the slice of an intra prediction type are decoded according to a standard decoding scheme.

There may be decoding blocks employing an ordinary intra prediction mode in the slice of an intra prediction type as long as the decoding methods of these decoding blocks follow the regulations of the standard.

Accordingly, as shown in Fig. 8, the decoder provided according to this embodiment includes:
a type parsing means 50 arranged to be capable of parsing a bitstream to obtain slice type information;
a first decoding means 60 arranged to decode a slice of an inter prediction type, and during decoding, use a first decoding scheme to configure a picture where the slice is located as a reference picture for the slice and decode decoding blocks employing an intra block copying (IBC) mode in the slice; and
a second decoding means 70 arranged to decode a slice of an intra prediction type, and during decoding, use a second decoding scheme that is different from the first decoding scheme to decode decoding blocks employing the IBC mode in the slice.

When the above first decoding means 60 decodes a slice of an inter prediction type, configuring a picture where the slice is located as a reference picture for the slice may include: inserting the picture where the slice is located into a reference picture list as a reference picture for the slice. The decoder using the first decoding scheme to configure the picture where the slice is located as a reference picture may further include: parsing the bitstream to obtain reference picture list modification information (i.e., reference picture list modification operation relevant parameters) and performing a reference picture list modification operation according to the relevant parameters to adjust the position of the current decoding picture in the reference picture list.

The above first coding means 60 using a first decoding scheme to decode decoding blocks employing an IBC mode in the slice may include: using a decoding scheme of an inter prediction mode to decode decoding blocks employing an IBC mode in the slice and obtaining IBC mode parameters by parsing bit fields corresponding to mode parameters of the inter prediction mode.

The above first coding means 60 obtaining IBC mode parameters by parsing bit fields corresponding to mode parameters of the inter prediction mode may include: obtaining at least one of the following IBC mode parameters by parsing a prediction unit (PU) and bit fields corresponding to motion information parameters therein: block partitioning, reference block indication vector and reference picture index.

The above second coding means 70 using a second decoding scheme that is different from the first decoding scheme to decode decoding blocks employing the IBC mode in the slice may include: obtaining at least one of the following IBC mode parameters by parsing bit fields corresponding to the IBC mode parameters in the decoding block: block partitioning and reference block indication vector. When using the second coding scheme to perform coding, the decoder may use a reference picture list to place the picture where the slice is located at a fixed position in the reference picture list without performing adaptive adjustment on the picture position in the reference picture list.

The above second decoding means 70 parsing bit fields corresponding to the IBC mode parameters in the decoding block may include: parsing bit fields corresponding to the IBC mode parameters in a coding unit (CU) to obtain the IBC mode parameters.

Before the above second decoding means 70 parses bit fields corresponding to the IBC mode parameters in the decoding block, the method may further include: parsing bit fields corresponding to IBC mode identification information in the decoding block to obtain the values of parameters corresponding to the IBC mode identification information. It should be noted that in the bitstream, the IBC mode identification information may directly identify that "the current decoding block employs the IBC mode"; and may also implicitly identify the IBC mode, for example, when a combination of relevant information indicates "pixels contained in an area with the same shape and size as the current decoding block in the picture where the current slice is located is used as prediction values of sampling values of pixels to be decoded in the current decoding block", the combination of relevant information may implicitly identify the IBC mode.

The above first decoding means and/or the second decoding means decoding the decoding blocks employing the IBC mode may include: during decoding, padding sampling values of non-decoded pixels in a reference block of the decoding block.

As a variant of this embodiment, for a slice of an inter prediction type, the first decoding means 60 may directly take a picture where the slice is located as a reference picture for the slice when configuring the picture where the slice is located as a reference picture for the slice using the first decoding scheme. The first decoding means 60 using the first decoding scheme to decode decoding blocks employing the IBC mode in the slice of an inter prediction type may include: parsing bit fields corresponding to IBC mode identification information in the CU to obtain the IBC mode identification information; parsing bit fields corresponding to the IBC mode parameters in the PU to obtain the values of the IBC mode parameters; or parsing bit fields corresponding to the IBC mode identification information and IBC mode parameters in the PU to obtain the IBC mode identification information and the values of the IBC mode parameters.

### Embodiment 3:

This embodiment provides an electronic device including a coder and/or decoder, herein the electronic device may use the coder in embodiment 1 to generate a video bitstream and/or use the decoder in embodiment 2 to decode a video bitstream.

The electronic device in this embodiment may be a relevant bitstream generation device and a receiving and playing device in video communication applications, such as mobile phone, computer, server, set-top box, portable mobile terminal, digital camera, TV broadcast system device and so on.

### Embodiment 4

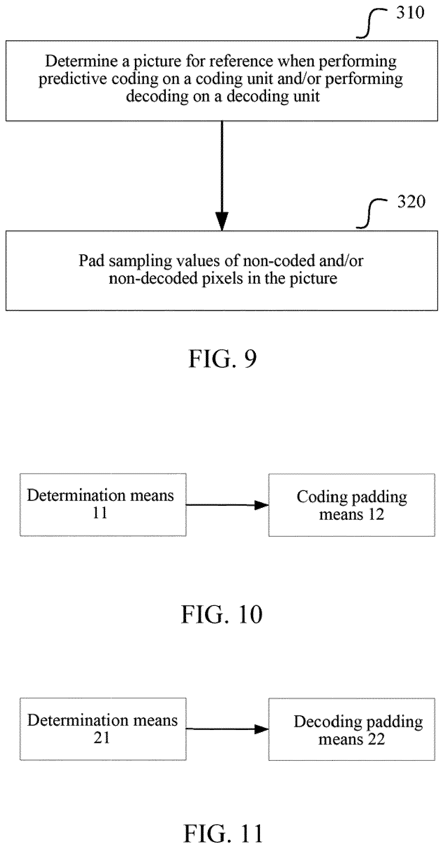

This embodiment provides a picture padding method, applied to a predictive coding and/or decoding process. The flow of this picture padding method is as shown in Fig. 9 and includes the following steps.

In step 310, a picture for reference when performing predictive coding on a coding unit and/or decoding on a decoding unit is determined.

Here, the coding unit may be the coding block in the above embodiments without limitation, and the modes employed by the coding block are not limited to any one, which may be IBC mode, inter prediction mode, ordinary intra prediction mode and so on. Here, the picture for reference may be the above reference picture, the picture where the slice is located and so on, which is not limited in the present invention.

In step 320, sampling values of non-coded and/or non-decoded pixels in the picture are padded.

Padding sampling values of non-coded pixels in the picture, the non-coded pixels may be non-coded pixels in the picture and may also be pixels outside the boundary of the picture, including:
before coding the coding unit, padding the sampling values of all or parts of non-coded pixels in the picture, herein some non-coded pixels in the picture refer to non-coded pixels in the current coding unit and an adjacent coding unit thereof or refer to non-coded pixels within a prediction block range to which motion vectors or block copying vectors point; and

In terms of the particular padding scheme, there may be two classes, i.e., not to use adaptive padding and use adaptive padding. With regard to not using adaptive padding, for example, the sampling values of non-decoded pixels in the reference picture may be configured as a default preset value, for example, 1/2 of the maximum allowable sampling value, 0 and maximum and so on. With regard to using adaptive padding, for example, the sampling values of non-coded pixels in the reference picture list may be configured as the mean value of the sampling values of the pixels of recently coded coding blocks or the sampling values of designated sampling points, or configured as the sampling value of the last coded pixel in each column direction. As another example, the sampling values of non-coded pixels in the reference picture are configured as output values of an interpolation filter. The input of the interpolation filter is sampling values of coded pixels. The filter may be a 1D filter along a certain designated direction (such as column direction) and may also be a 2D filter. The filter may be an interpolation filter using fixed coefficients and may also be an adaptive filter. The coder writes parameter information such as filter shape, coefficients and so on into a bitstream. The coder may determine the particular parameters used in the coding process with a coder optimization module (such as commonly used coder control module designed based on rate distortion criterion).

Padding sampling values of non-decoded pixels in the picture includes:
before decoding the decoding unit, padding the sampling values of all or parts of non-decoded pixels in the picture, herein some non-decoded pixels in the picture refer to non-decoded pixels in the current decoding unit and an adjacent decoding unit thereof or refer to non-decoded pixels within a prediction block range to which motion vectors or block copying vector point.

In terms of the particular padding scheme, there may be two classes, i.e., not to use adaptive padding and use adaptive padding. With regard to not using adaptive padding, for example, the sampling values of non-decoded pixels in the reference picture may be configured as a default preset value, for example, 1/2 of the maximum allowable sampling value, 0 and maximum and so on. With regard to using adaptive padding, for example, the sampling values of non-coded pixels in the reference picture list may be configured as the mean value of the sampling values of the pixels of recently coded coding blocks or the sampling values of designated sampling points or configured as the sampling value of the last coded pixel in each column direction. As another example, the sampling values of non-coded pixels in the reference picture are configured as output values of an interpolation filter. The input of the interpolation filter is sampling values of coded pixels. The filter may be a 1D filter along a certain designated direction (such as column direction) and may also be a 2D filter. The filter may be an interpolation filter using fixed coefficients and may also be an adaptive filter. The decoder may obtain parameter information such as filter shape, coefficients and so on by parsing the bitstream.

Alternatively, in the process of predictive coding, after padding sampling values of non-coded pixels in the picture, the method further includes: writing corresponding padding scheme information into a bitstream, the padding scheme information including at least one of the following information:
indication information about whether adaptive padding is used;
when adaptive padding is used, indication information about the used padding scheme and relevant parameters;
when adaptive padding is not used, padding values of sampling values of used non-coded pixels; and
accordingly, in the process of decoding, padding sampling values of non-decoded pixels in the picture according to the padding scheme information parsed from the bitstream.

After padding sampling values of non-coded pixels in the picture, the method may further include: after the coding unit completes coding, updating sampling values of corresponding pixels in the picture with local decoded and reconstructed sampling values of coded pixels in the current coding picture, and padding the sampling values of the non-coded pixels in the picture using the reconstructed sampling values.

After padding sampling values of non-decoded pixels in the picture, the method may further include: after the decoding unit completes decoding, updating sampling values of corresponding pixels in the picture with reconstructed sampling values of decoded pixels in the current decoded picture, and padding the sampling values of the non-decoded pixels in the picture using the reconstructed sampling values.

Accordingly, this embodiment provides an electronic device including a coder and/or decoder, herein
as shown in Fig. 10, the coder includes:
a determination means 11 arranged to be capable of determining a picture for reference when performing predictive coding on a coding unit; and
a coding padding means 12 arranged to be capable of padding sampling values of non-coded pixels in the picture; and
as shown in Fig. 11, the decoder includes:
   a determination means 21 arranged to be capable of determining a picture for reference when performing decoding on a decoding unit; and
   a decoding padding means 22 arranged to be capable of padding sampling values of non-decoded pixels in the picture.

The coding padding means 12 padding sampling values of non-coded pixels in the picture may include:
before coding the coding unit, padding the sampling values of all or parts of non-coded pixels in the picture, herein some non-coded pixels in the picture refer to non-coded pixels in the current coding unit and an adjacent coding unit thereof or refer to non-coded pixels within a prediction block range to which motion vectors or block copying vectors point; and

In terms of the particular padding scheme, there may be two classes, i.e., not to use adaptive padding and use adaptive padding. With regard to not using adaptive padding, for example, the sampling values of non-decoded pixels in the reference picture may be configured as a default preset value, for example, 1/2 of the maximum allowable sampling value, 0 and maximum and so on. With regard to using adaptive padding, for example, the sampling values of non-coded pixels in the reference picture list may be configured as the mean value of the sampling values of the pixels of recently coded coding blocks or the sampling values of designated sampling points or configured as the sampling value of the last coded pixel in each column direction. The sampling values of non-coded pixels in the reference picture are configured as output values of an interpolation filter. The input of the interpolation filter is sampling values of coded pixels. The filter may be a 1D filter along a certain designated direction (such as column direction) and may also be a 2D filter. The filter may be an interpolation filter using fixed coefficients and may also be an adaptive filter. The coder writes parameter information such as filter shape, coefficients and so on into a bitstream. The coder may determine the particular parameters used in the coding process with a coder optimization module (such as commonly used coder control module designed based on rate distortion criterion).

The decoding padding means 22 padding sampling values of non-decoded pixels in the picture may include:
before decoding the decoding unit, padding the sampling values of all or parts of non-decoded pixels in the picture, herein some non-decoded pixels in the picture refer to non-decoded pixels in the current decoding unit and an adjacent decoding unit thereof or refer to non-decoded pixels within a prediction block range to which motion vectors or block copying vectors point; and

In terms of the particular padding scheme, there may be two classes, i.e., not to use adaptive padding and use adaptive padding. With regard to not using adaptive padding, for example, the sampling values of non-decoded pixels in the reference picture may be configured as a default preset value, for example, 1/2 of the maximum allowable sampling value, 0 and maximum and so on. With regard to using adaptive padding, for example, the sampling values of non-coded pixels in the reference picture list may be configured as the mean value of the sampling values of the pixels of recently coded coding blocks or the sampling values of designated sampling points or configured as the sampling value of the last coded pixel in each column direction. As another example, the sampling values of non-coded pixels in the reference picture are configured as output values of an interpolation filter. The input of the interpolation filter is sampling values of coded pixels. The filter may be a 1D filter along a certain designated direction (such as column direction) and may also be a 2D filter. The filter may be an interpolation filter using fixed coefficients and may also be an adaptive filter. The decoder may obtain parameter information such as filter shape, coefficients and so on by parsing the bitstream.

After the coding padding means 12 pads sampling values of non-coded pixels in the picture, the method may further include: writing corresponding padding scheme information into a bitstream, the padding scheme information including at least one of the following information:
indication information about whether adaptive padding is used;
when adaptive padding is used, indication information about the used padding scheme and relevant parameters;
when adaptive padding is not used, padding values of sampling values of used non-coded pixels; and
accordingly, in the process of the decoding padding means 22 performing decoding, padding sampling values of non-decoded pixels in the picture according to the padding scheme information parsed from the bitstream.

After the coding padding means 12 pads sampling values of non-coded pixels in the picture, the method may further include:
after the coding unit completes coding, updating sampling values of corresponding pixels in the picture with local decoded and reconstructed sampling values of coded pixels in the current coding picture, and padding the sampling values of the non-coded pixels in the picture using the reconstructed sampling values.

After the decoding padding means 22 pads sampling values of non-decoded pixels in the picture, the method may further include:
after the decoding unit completes decoding, updating sampling values of corresponding pixels in the picture with reconstructed sampling values of decoded pixels in the current decoding picture, and padding the sampling values of the non-decoded pixels in the picture using the reconstructed sampling values.

Those skilled in the art can understand that all or some steps in the above method may be completed by a program instructing relevant hardware, which may be stored in a computer-readable storage medium, such as read only memory, magnetic disk or optical disk and so on. Alternatively, all or some steps of the above embodiments may also be implemented with one or more integrated circuits. Accordingly, various modules/units in the above embodiments may be implemented with hardware and may also be implemented with software functional modules. The present invention is not limited to any specific combination of hardware and software.

The present invention may also have other embodiments, and those skilled in the art can make various corresponding changes and variations which belong to the protection scope of the claims appended in the present invention without departing from the spirit and essence of the present invention.

### Industrial Applicability

In the present invention, employing different coding schemes to code coding blocks employing the IBC mode in a slice of an inter prediction type and a slice of an intra prediction type may improve coding efficiency. Therefore, the present application is industrially applicable.

## Claims

1. A predictive coding method, applied to a coder, comprising:
configuring types of slices;
when coding a slice of an inter prediction type, configuring a picture where the slice is located as a reference picture for the slice and using a first coding scheme to code coding blocks employing intra block copying, IBC, mode in the slice; and
when coding a slice of an intra prediction type, using a second coding scheme that is different from the first coding scheme to code coding blocks employing IBC mode in the slice.

2. The predictive coding method according to claim 1, wherein
when coding a slice of an inter prediction type, configuring a picture where the slice is located as a reference picture for the slice comprises: inserting the picture where the slice is located into a reference picture list as the reference picture for the slice.

3. The predictive coding method according to claim 2, wherein
when coding a slice of an inter prediction type, configuring a picture where the slice is located as a reference picture for the slice further comprises: adjusting the position of the picture where the slice is located in the reference picture list using a reference picture list modification operation and writing parameters relevant to the reference picture list modification operation into a bitstream.

4. The predictive coding method according to claim 1 or 2 or 3, wherein
using a first coding scheme to code coding blocks employing an IBC mode in the slice of an inter prediction type comprises: using a mode parameter coding scheme of an inter prediction mode to code IBC mode parameters.

5. The predictive coding method according to claim 4, wherein
using a mode parameter coding scheme of an inter prediction mode to code IBC mode parameters comprises: using a motion information coding method of a prediction unit, PU, to code IBC mode parameters, the coded IBC mode parameters including at least one of the following parameters: block partitioning, reference block indication vector and reference picture index.

6. The predictive coding method according to claim 1 or 2 or 3 or 5, wherein
using a second coding scheme to code coding blocks employing the IBC mode in the slice of an intra prediction type comprises:
coding IBC mode parameters in a coding block, the coded IBC mode parameters including at least one of the following parameters: block partitioning and reference block indication vector.

7. The predictive coding method according to claim 6, wherein
using a second coding scheme to code coding blocks employing the IBC mode in the slice of an intra prediction type further comprises:
during coding, using a reference picture list to place the picture where the slice is located at a fixed position in the reference picture list and not perform a reference picture list modification operation.

8. The predictive coding method according to claim 6, wherein
coding IBC mode parameters in a coding block comprises: coding IBC mode parameters in a coding unit, CU.

9. The predictive coding method according to claim 6, wherein
before coding IBC mode parameters in a coding block, the method further comprises: coding IBC mode identification information.

10. The predictive coding method according to claim 1, wherein
configuring a picture where the slice is located as a reference picture for the slice comprises: directly taking the picture where the slice is located as the reference picture for the slice; and
using a first coding scheme to code coding blocks employing the IBC mode in the slice of an inter prediction type comprises:
using a coding unit, CU, to code IBC mode identification information and using a prediction unit, PU, to code IBC mode parameter information; or
using a prediction unit, PU, to code IBC mode identification information and IBC mode parameter information.

11. The predictive coding method according to claim 1, comprising:
using the first coding scheme and/or the second coding scheme to code coding blocks employing the IBC mode comprises: during coding, padding sampling values of non-coded pixels in a reference block of the coding block.

12. A decoding method, applied to a decoder, comprising:
parsing a bitstream to obtain slice type information;
when decoding a slice of an inter prediction type, using a first decoding scheme to configure a picture where the slice is located as a reference picture for the slice and decode decoding blocks employing an intra block copying, IBC, mode in the slice; and
when decoding a slice of an intra prediction type, using a second decoding scheme that is different from the first decoding scheme to decode decoding blocks employing the IBC mode in the slice.

13. The decoding method according to claim 12, wherein
using a first decoding scheme to configure a picture where the slice is located as a reference picture for the slice comprises: inserting the picture where the slice is located into a reference picture list as a reference picture for the slice.

14. The decoding method according to claim 13, wherein
using a first decoding scheme to configure a picture where the slice is located as a reference picture for the slice further comprises:
parsing the bitstream to obtain relevant parameters of a reference picture list modification operation; and
according to the relevant parameters, using a reference picture list modification operation to adjust the position of the picture where the slice is located in a reference picture list.

15. The decoding method according to claim 12 or 13 or 14, wherein
using a first decoding scheme to decode decoding blocks employing an IBC mode in the slice comprises: using a decoding scheme of an inter prediction mode to decode decoding blocks employing the IBC mode in the slice and obtaining IBC mode parameters by parsing bit fields corresponding to mode parameters of the inter prediction mode.

16. The decoding method according to claim 15, wherein
obtaining IBC mode parameters by parsing bit fields corresponding to mode parameters of the inter prediction mode comprises: obtaining at least one of the following IBC mode parameters by parsing a prediction unit, PU, and bit fields corresponding to motion information parameters therein: block partitioning, reference block indication vector and reference picture index.

17. The decoding method according to claim 12 or 13 or 14 or 16, wherein
using a second decoding scheme that is different from the first decoding scheme to decode decoding blocks employing the IBC mode in the slice comprises: obtaining at least one of the following IBC mode parameters by parsing bit fields corresponding to the IBC mode parameters in the decoding block: block partitioning and reference block indication vector.

18. The decoding method according to claim 17, wherein
using a second decoding scheme to decode decoding blocks employing the IBC mode in the slice further comprises:
during decoding, using a reference picture list to place the picture where the slice is located at a fixed position in the reference picture list and not perform a reference picture list modification operation.

19. The decoding method according to claim 17, wherein
parsing bit fields corresponding to the IBC mode parameters in the decoding block comprises: parsing bit fields corresponding to the IBC mode parameters in a coding unit, CU, to obtain the IBC mode parameters.

20. The decoding method according to claim 17, wherein
before parsing bit fields corresponding to the IBC mode parameters in the decoding block, the method further comprises: parsing bit fields corresponding to the IBC mode identification information in the decoding block to obtain the values of parameters corresponding to the IBC mode identification information.

21. The decoding method according to claim 12, wherein
using a first decoding scheme to configure a picture where the slice is located as a reference picture for the slice comprises: directly taking the picture where the slice is located as the reference picture for the slice;
using a first decoding scheme to decode decoding blocks employing the IBC mode in the slice of an inter prediction type comprises:
parsing bit fields corresponding to the IBC mode identification information in a CU to obtain IBC mode identification information; and parsing bit fields corresponding to IBC mode parameters in a PU to obtain the values of the IBC mode parameters; or
parsing bit fields corresponding to the IBC mode identification information and the IBC mode parameters in a PU to obtain the IBC mode identification information and the values of the IBC mode parameters.

22. The decoding method according to claim 12, comprising:
using the first decoding scheme and/or the second decoding scheme to decode decoding blocks employing the IBC mode comprises: during decoding, padding sampling values of non-decoded pixels in a reference block of the decoding block.

23. A coder, comprising:
a type configuration means arranged to be capable of configuring types of slices;
a first coding means arranged to code a slice of an inter prediction type, and during coding, configure a picture where the slice is located as a reference picture for the slice and use a first coding scheme to code coding blocks employing an intra block copying, IBC, mode in the slice; and
a second coding means arranged to code a slice of an intra prediction type, and during coding, use a second coding scheme that is different from the first coding scheme to code coding blocks employing the IBC mode in the slice.

24. The coder according to claim 23, wherein
when the first coding means codes a slice of an inter prediction type, configuring a picture where the slice is located as a reference picture for the slice comprises: inserting the picture where the slice is located into a reference picture list as a reference picture for the slice.

25. The coder according to claim 24, wherein
when the first coding means codes a slice of an inter prediction type, configuring a picture where the slice is located as a reference picture for the slice further comprises: adjusting the position of the picture where the slice is located in the reference picture list using a reference picture list modification operation and writing parameters relevant to the reference picture list modification operation into a bitstream.

26. The coder according to claim 23 or 24 or 25, wherein
the first coding means using a first coding scheme to code coding blocks employing an IBC mode in the slice of an inter prediction type comprises: using a mode parameter coding scheme of an inter prediction mode to code IBC mode parameters.

27. The coder according to claim 26, wherein
the first coding means using a mode parameter coding scheme of an inter prediction mode to code IBC mode parameters comprises: using a motion information coding method of a prediction unit, PU, to code IBC mode parameters, the coded IBC mode parameters including at least one of the following parameters: block partitioning, reference block indication vector and reference picture index.

28. The coder according to claim 23 or 24 or 25 or 27, wherein
the second coding means using a second coding scheme to code coding blocks employing the IBC mode in the slice of an intra prediction type comprises: directly coding IBC mode parameters in a coding block, the coded IBC mode parameters including at least one of the following parameters: block partitioning and reference block indication vector.

29. The coder according to claim 23, wherein
the second coding means using a second coding scheme to code coding blocks employing the IBC mode in the slice of an intra prediction type further comprises:
during coding, using a reference picture list to place the picture where the slice is located at a fixed position in the reference picture list and not perform a reference picture list modification operation.

30. The coder according to claim 28, wherein
the second coding means coding IBC mode parameters in a coding block comprises: coding the IBC mode parameters in a coding unit, CU.

31. The coder according to claim 28, wherein
before the second coding means codes the IBC mode parameters in a coding block, the method further comprises: coding IBC mode identification information.

32. The coder according to claim 23, wherein
the first coding means configuring a picture where the slice is located as a reference picture for the slice comprises: directly taking the picture where the slice is located as a reference picture for the slice;
the first coding means using a first coding scheme to code coding blocks employing the IBC mode in the slice of an inter prediction type comprises:
using a coding unit, CU, to code IBC mode identification information and using a prediction unit, PU, to code IBC mode parameter information; or
using a prediction unit, PU, to code IBC mode identification information and IBC mode parameter information.

33. The coder according to claim 23, comprising:
the first coding means and/or the second coding means coding coding blocks employing the IBC mode comprises: during coding, padding sampling values of non-coded pixels in a reference block of the coding block.

34. A decoder, comprising:
a type parsing means arranged to be capable of parsing a bitstream to obtain slice type information;
a first decoding means arranged to decode a slice of an inter prediction type, and during decoding, use a first decoding scheme to configure a picture where the slice is located as a reference picture for the slice and decode decoding blocks employing an intra block copying, IBC, mode in the slice; and
a second decoding means arranged to decode a slice of an intra prediction type, and during decoding, use a second decoding scheme that is different from the first decoding scheme to decode decoding blocks employing the IBC mode in the slice.

35. The decoder according to claim 34, wherein
when the first decoding means decodes a slice of an inter prediction type, configuring a picture where the slice is located as a reference picture for the slice comprises: inserting the picture where the slice is located into a reference picture list as a reference picture for the slice.

36. The decoder according to claim 35, wherein
the first coding means using a first decoding scheme to configure a picture where the slice is located as a reference picture for the slice further comprises:
parsing the bitstream to obtain relevant parameters of a reference picture list modification operation; and
according to the relevant parameters, using a reference picture list modification operation to adjust the position of the picture where the slice is located in a reference picture list.

37. The decoder according to claim 34 or 35 or 36, wherein
the first coding means using a first decoding scheme to decode decoding blocks employing an IBC mode in the slice comprises: using a decoding scheme of an inter prediction mode to decode decoding blocks employing an IBC mode in the slice and obtaining IBC mode parameters by parsing bit fields corresponding to mode parameters of the inter prediction mode.

38. The decoder according to claim 37, wherein
the first coding means obtaining IBC mode parameters by parsing bit fields corresponding to mode parameters of the inter prediction mode comprises: obtaining at least one of the following IBC mode parameters by parsing a prediction unit, PU, and bit fields corresponding to motion information parameters therein: block partitioning, reference block indication vector and reference picture index.

39. The decoder according to claim 34 or 35 or 36 or 38, wherein
the second decoding means using a second decoding scheme that is different from the first decoding scheme to decode decoding blocks employing the IBC mode in the slice comprises: obtaining at least one of the following IBC mode parameters by parsing bit fields corresponding to the IBC mode parameters in the decoding block: block partitioning and reference block indication vector.

40. The decoder according to claim 39, wherein
the second decoding means using a second decoding scheme to decode decoding blocks employing the IBC mode in the slice further comprises:
during decoding, using a reference picture list to place the picture where the slice is located at a fixed position in the reference picture list and not perform a reference picture list modification operation.

41. The decoder according to claim 39, wherein
the second decoding means parsing bit fields corresponding to the IBC mode parameters in the decoding block comprises: parsing bit fields corresponding to the IBC mode parameters in a coding unit, CU, to obtain the IBC mode parameters.

42. The decoder according to claim 39, wherein
before the second decoding means parses bit fields corresponding to the IBC mode parameters in the decoding block, the method further comprises: parsing bit fields corresponding to the IBC mode identification information in the decoding block to obtain the values of parameters corresponding to the IBC mode identification information.

43. The decoder according to claim 34, wherein
the first decoding means using a first decoding scheme to configure a picture where the slice is located as a reference picture for the slice comprises: directly taking the picture where the slice is located as a reference picture for the slice;
the first decoding means using a first decoding scheme to decode decoding blocks employing the IBC mode in the slice of an inter prediction type comprises:
parsing bit fields corresponding to the IBC mode identification information in a CU to obtain IBC mode identification information; and parsing bit fields corresponding to the IBC mode parameters in a PU to obtain the values of the IBC mode parameters; or
parsing bit fields corresponding to the IBC mode identification information and the IBC mode parameters in a PU to obtain the IBC mode identification information and the values of the IBC mode parameters.

44. The decoder according to claim 34, comprising:
the first decoding means and/or the second decoding means decoding the decoding blocks employing the IBC mode comprises: during decoding, padding sampling values of non-decoded pixels in a reference block of the decoding block.

45. An electronic device comprising a coder and/or decoder, wherein
the coder employing the coder of any one of claims 23 to 33; and
the decoder employing the decoder of any one of claims 34 to 44.

46. A picture padding method, applied to a predictive coding and/or decoding process, comprising:
determining a picture for reference when performing predictive coding on a coding unit and/or decoding a decoding unit; and
padding sampling values of non-coded and/or non-decoded pixels in the picture.

47. The picture padding method according to claim 46, wherein
padding sampling values of non-coded pixels in the picture comprises:
padding the sampling values of all or parts of non-coded pixels in the picture, wherein parts of non-coded pixels in the picture refer to non-coded pixels in a current coding unit and an adjacent coding unit thereof or refer to non-coded pixels within a prediction block range to which motion vectors or block copying vectors point; and
padding sampling values of non-decoded pixels in the picture comprises:
padding the sampling values of all or parts of non-decoded pixels in the picture, wherein some non-decoded pixels in the picture refer to non-decoded pixels in a current decoding unit and an adjacent decoding unit thereof or refer to non-decoded pixels within a prediction block range to which motion vectors or block copying vectors point.

48. The picture padding method according to claim 46 or 47, wherein
padding sampling values of non-coded pixels in the picture comprises:
configuring sampling values of non-coded pixels in the picture as default values; or
configuring sampling values of non-coded pixels in the picture as sampling values of specified pixels; or
configuring sampling values of non-coded pixels in the picture as an output values of sampling values of coded pixels after filtering processing; and
padding sampling values of non-decoded pixels in the picture comprises:
configuring sampling values of non-decoded pixels in the picture as default values; or
configuring sampling values of non-decoded pixels in the picture as sampling values of specified pixels; or
configuring sampling values of non-decoded pixels in the picture as output values of sampling values of decoded pixels after filtering processing.

49. The picture padding method according to claim 46 or 47, wherein
in the process of predictive coding, after padding sampling values of non-coded pixels in the picture, the method further comprises: writing corresponding padding scheme information into a bitstream, the padding scheme information including at least one of the following information:
indication information about whether adaptive padding is used;
when adaptive padding is used, indication information about the used padding scheme and relevant parameters;
when adaptive padding is not used, padding values of sampling values of used non-coded pixels; and
in the process of decoding, padding sampling values of non-decoded pixels in the picture according to the padding scheme information parsed from the bitstream.

50. The picture padding method according to claim 46 or 47, wherein
after padding sampling values of non-coded pixels in the picture, the method further comprises: after the coding unit completes coding, updating sampling values of corresponding pixels in the picture with local decoded and reconstructed sampling values of coded pixels in a current coding picture, and padding the sampling values of the non-coded pixels in the picture using the reconstructed sampling values.

51. The picture padding method according to claim 46 or 47, wherein
after padding sampling values of non-decoded pixels in the picture, the method further comprises: after the decoding unit completes decoding, updating sampling values of corresponding pixels in the picture with reconstructed sampling values of decoded pixels in a current decoded picture, and padding the sampling values of the non-decoded pixels in the picture using the reconstructed sampling values.

52. An electronic device comprising a coder and/or decoder, wherein
the coder comprises:
a determination means arranged to be capable of determining a picture for reference when performing predictive coding on a coding unit;
a coding padding means arranged to be capable of padding sampling values of non-coded pixels in the picture; and
the decoder comprises:
a determination means arranged to be capable of determining a picture for reference when performing decoding on a decoding unit; and
a decoding padding means arranged to be capable of padding sampling values of non-decoded pixels in the picture.

53. The electronic device according to claim 52, wherein
the coding padding means padding sampling values of non-coded pixels in the picture comprises:
before coding the coding unit, padding the sampling values of all or parts of non-coded pixels in the picture, wherein parts of non-coded pixels in the picture refer to non-coded pixels in a current coding unit and an adjacent coding unit thereof or refer to non-coded pixels within a prediction block range to which motion vectors or block copying vectors point; and
the decoding padding means padding sampling values of non-decoded pixels in the picture comprises:
before decoding the decoding unit, padding the sampling values of all or parts of non-decoded pixels in the picture, wherein parts of non-decoded pixels in the picture refer to non-decoded pixels in a current decoding unit and an adjacent decoding unit thereof or refer to non-decoded pixels within a prediction block range to which motion vectors or block copying vectors point.

54. The electronic device according to claim 52 or 53, wherein
the coding padding means padding sampling values of non-coded pixels in the picture comprises:
configuring sampling values of non-coded pixels in the picture as default values; or
configuring sampling values of non-coded pixels in the picture as sampling values of specified pixels; or
configuring sampling values of non-coded pixels in the picture as output values of sampling values of coded pixels after filtering processing; and
the decoding padding means padding sampling values of non-decoded pixels in the picture comprises:
configuring sampling values of non-decoded pixels in the picture as default values; or
configuring sampling values of non-decoded pixels in the picture as sampling values of specified pixels; or
configuring sampling values of non-decoded pixels in the picture as output values of sampling values of decoded pixels after filtering processing.

55. The electronic device according to claim 52 or 53, wherein
after the coding padding means pads sampling values of non-coded pixels in the picture, the method further comprises: writing corresponding padding scheme information into a bitstream, the padding scheme information including at least one of the following information:
indication information about whether adaptive padding is used;
when adaptive padding is used, indication information about the used padding scheme and relevant parameters;
when adaptive padding is not used, padding values of sampling values of used non-coded pixel; and
in the process of the decoding padding means performing decoding, padding sampling values of non-decoded pixels in the picture according to the padding scheme information parsed from the bitstream.

56. The electronic device according to claim 52 or 53, wherein
after the coding padding means pads sampling values of non-coded pixels in the picture, the method further comprises:
after the coding unit completes coding, updating sampling values of corresponding pixels in the picture with local decoded and reconstructed sampling values of coded pixels in a current coding picture, and padding the sampling values of the non-coded pixels in the picture using the reconstructed sampling values.

57. The electronic device according to claim 52 or 53, wherein
after the decoding padding means pads sampling values of non-decoded pixels in the picture, the method further comprises:
after the decoding unit completes decoding, updating sampling values of corresponding pixels in the picture with reconstructed sampling values of decoded pixels in a current decoding picture, and padding the sampling values of the non-decoded pixels in the picture using the reconstructed sampling values.
